Europäisches Patentamt

European Patent Office

Office européen des brevets

(19)

(11) Numéro de publication: **0 093 043**

**A1**

(12) **DEMANDE DE BREVET EUROPEEN**

(21) Numéro de dépôt: **83400778.3**

(22) Date de dépôt: **19.04.83**

(51) Int. Cl.³: **B 60 R 21/10**

(30) Priorité: **26.04.82 FR 8207133**

(43) Date de publication de la demande:
**02.11.83 Bulletin 83/44**

(84) Etats contractants désignés:
**DE GB IT SE**

(71) Demandeur: **ACIERS ET OUTILLAGE PEUGEOT Société dite:**

**F-25400 Audincourt (Doubs)(FR)**

(72) Inventeur: **Rietsch, Maurice**
**1 Rue Berlioz**
**F-25700 Valentigney(FR)**

(72) Inventeur: **Joly, Jean**
**10 Rue de Besançon**
**F-25150 Pont de Roide(FR)**

(74) Mandataire: **Polus, Camille et al,**
**c/o Cabinet Lavoix 2, Place d'Estienne d'Orves**
**F-75441 Paris Cedex 09(FR)**

(54) **Rétracteur pour sangle de sécurité.**

(57) Dans ce rétracteur, l'ensemble central (4) comporte une lame métallique (9) et un enrobage (10). Dans les zones où cet enrobage forme les portées de tourillonnement de l'ensemble (4), il est prévu des plaquettes (25a,25b) qui à leur périphérie ne sont couvertes que par une mince couche de l'enrobage. On évite ainsi les défauts de rotondité de l'ensemble central et les irrégularités d'enroulement et de déroulement de la sangle (S).

FIG.1

EP 0 093 043 A1

Croydon Printing Company Ltd.

Rétracteur pour sangle de sécurité.-

La présente invention concerne un rétracteur pour sangle de sécurité du type comportant un support, un ensemble central rigide solidaire d'une extrémité de la sangle, monté rotatif dans le support et autour duquel la sangle est destinée à s'enrouler sous l'action d'une force de rappel élastique, cet ensemble étant en outre associé à un mécanisme de blocage qui est capable d'empêcher la rotation de l'ensemble dans le sens du déroulement de la sangle, lorsqu'une valeur limite d'accélération ou de décélération appliquée à la sangle et/ou au support est dépassée, ledit ensemble comportant en tant que noyau central, une lame métallique enrobée dans de la matière plastique moulée dans laquelle est ancrée la sangle et qui définit deux portées coaxiales au moyen desquelles l'ensemble est monté à rotation dans le support.

Un ensemble central rigide appelé aussi mandrin, pour un rétracteur de ce type est décrit au DE.2 704 084. La lame métallique confère à cet ensemble la rigidité mécanique requise pour transmettre les efforts exercés sur la sangle au mécanisme de blocage avec lequel elle est accouplée par une liaison rigide. Quant à l'enrobage, il sert d'ancrage à la sangle. Enfin, cet enrobage doit fournir les portées engagées dans des trous de palier ménagés dans le support.

Cet agencement antérieur, tout en allégeant la construction du rétracteur et en facilitant la fabrication de celui-ci, présente néanmoins un inconvénient qui réside dans les défauts de rotondité pouvant se présenter au niveau des portées. En effet, lors du surmoulage de la lame métallique, la forme extérieure au niveau des portées est uniquement déterminée par la forme du moule qui ne peut être déterminée qu'avec une précision limitée sous peine d'augmenter considérablement le coût de fabrication du moule. Les portées n'ayant pas une rotondité parfaite, le déroulement de la sangle peut alors être

2

irrégulier ce qui constitue une gêne pour l'utilisateur.
En outre, la matière plastique fortement sollicitée dans
les zones des portées pendant les nombreux cycles d'enroulement et de déroulement que doit subir le rétracteur,
s'use de façon prématurée, ce qui augmente encore les
défauts de rotondité.

L'invention a pour but de remédier à cet inconvénient et à cet effet, elle a pour objet un rétracteur
du type défini ci-dessus qui est caractérisé en ce que
ledit ensemble central rigide comporte à chacune de ses
extrémités une plaquette circulaire de renfort rigide
engagée perpendiculairement sur l'extrémité correspondante de la lame métallique dans la zone de portée de cet
ensemble et en ce que la périphérie de chaque plaquette
n'est recouverte que d'une mince couche de l'enrobage
en matière plastique.

Ainsi, au droit de chaque plaquette de renfort,
la matière plastique est soutenue de façon efficace pour
former une portée dont la rotondité est garantie par la
forme circulaire de la plaquette que l'on peut fabriquer
facilement avec une précision suffisamment élevée.

Suivant une autre caractéristique de l'invention,
s'appliquant au cas où la lame métallique présente
une section rectangulaire, chacune desdites plaquettes
présente une ouverture de la section de cette lame et
disposée symétriquement par rapport à son axe, les grands
côtés de l'ouverture présentant des échancrures dans lesquelles la matière plastique d'enrobage peut pénétrer.

Grâce à cette forme particulière de la plaquette,
on obtient une solidarisation parfaite avec la lame d'une
part et l'enrobage d'autre part.

Suivant encore une autre caractéristique de l'invention, la plaquette se trouvant du côté de l'ensemble
central rigide, tourné vers le mécanisme de blocage comporte deux portions en saillie de l'une de ses faces

3

et en ce que ces portions sont à découvert à la face terminale de l'ensemble rigide afin de servir d'appui axial à un élément faisant partie dudit mécanisme de blocage et rigidement fixé en rotation audit ensemble central rigide.

Il résulte de cette caractéristique un positionnement axial précis de cet élément du mécanisme de blocage.

L'invention est exposée ci-après plus en détail à l'aide de dessins représentant seulement un mode d'éxécution, sur lesquels :

- la Fig.1 représente une vue en coupe axiale d'un rétracteur pour sangle de sécurité suivant l'invention;

- les Fig.2 et 3 sont des vues en coupe radiale respectivement suivant les lignes 2-2 et 3-3 de la Fig. 1;

- la Fig.4 est une vue en perspective de l'une des plaquettes de renfort utilisée dans l'ensemble rigide central du rétracteur;et

- la Fig.5 montre par une vue en coupe radiale, l'ancrage de la sangle dans cet ensemble rigide.

Suivant le mode d'éxécution représenté sur les Fig., le rétracteur de l'invention comporte un support 1 en forme d'étrier ayant une base 1a et deux ailes latérales 1b et 1c. Ces ailes présentent chacune une ouverture 2 alignée sur l'ouverture de l'autre aile et dans lesquelles sont placés respectivement des coussinets 3 ayant en section radiale la forme d'une équerre.

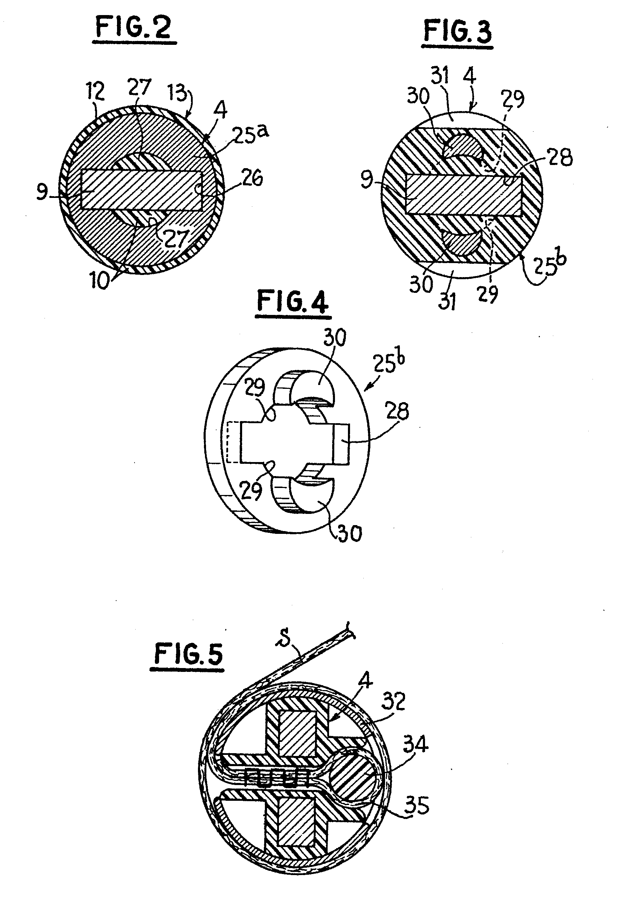

Un ensemble central rigide 4 est monté à rotation dans le support 1 autour d'un axe X-X. Une sangle S de sécurité est ancrée dans cet ensemble 4 comme le montre en particulier la Fig.5. Cette sangle est rappelée dans sa configuration rétractée à l'aide d'un ressort de rappel (non représenté) couplé entre l'ensemble

4

4 et le support 1, le ressort étant disposé contre la face extérieure de l'aile 1b de ce support en étant recouvert d'un capuchon 5. Du côté opposé, le rétracteur présente un mécanisme de blocage 6 qui est capable d'arrêter le déroulement de la sangle par le blocage en rotation de l'ensemble central 4 par rapport au support 1. Ce mécanisme comporte à cet effet, des éléments à inertie réagissant soit sur un choc subi par le rétracteur, c'est-à-dire par le véhicule (pendule 7), soit par un déroulement brusque de la sangle (volant d'inertie 8). Ce mécanisme de blocage ne sera pas décrit en détail, car on peut en trouver une description complète dans la demande de brevet français n° 2 293 225, le certificat d'addition à ce brevet n° 2 319 390, le brevet français n° 2 319 389 ainsi que la demande française n° 80 04 157 déposée le 26 Février 1980, tous ces documents ayant été déposés au nom de la Demanderesse.

Toutefois, l'invention peut s'appliquer à des rétracteurs dont le mécanisme de blocage est conçu d'une autre façon.

L'ensemble central rigide 4 comporte un noyau formé par une lame métallique 9 de section constante rectangulaire disposée symétriquement par rapport à l'axe X-X du rétracteur. Cette lame est noyée dans un enrobage 10 en matière plastique moulée dont la forme va maintenant être décrite en détail.

Du côté du ressort de rappel, cet enrobage 10 comporte un ergot d'ancrage cylindrique 11 dans lequel est attachée une extrémité du ressort de rappel. A cet ergot 11 est raccordée une portion en forme de disque 12 dont la surface cylindrique extérieure forme portée reçue dans le coussinet 3 qui est monté dans l'aile 1b du support. La portion en forme de disque 12 est suivie d'une portion de raccordement 14 de faible diamètre, à son tour suivie d'une portion centrale 15 dont la section pré-

5

sente une forme qui apparaît clairement sur la Fig.5.

Du côté opposé du rétracteur, la portion centrale 15 est raccordée à une portion de raccordement 16 de faible diamètre suivie d'une portion 17 formant portée 18 coopérant avec le coussinet 3 à cet endroit. Cette portion formant portée est raccordée à une portion de montage 19 sur laquelle est emprisonnée la came 20 du mécanisme de blocage 6, came qui coopère par l'intermédiaire de galets de blocage 21 avec une couronne extérieure 22 fixée rigidement sur la face extérieure de l'aile 1c.

Enfin, l'enrobage 10 comporte également une portion terminale 23 formant axe de rotation du volant d'inertie 8 qui est retenu sur cette portion 23 par l'intermédiaire d'une rondelle de blocage élastique 24.

Afin de renforcer les portions 12 et 17 formant portée, l'ensemble rigide central 4 comporte des plaquettes de renforcement 25a et 25b disposées radialement par rapport à l'axe X-X et centrées sur celui-ci. La plaquette 25a située du côté du ressort de rappel du rétracteur (Fig.2) est de forme circulaire et présente une ouverture centrale 26 de même section que celle de la lame 9, les grandes bases de cette ouverture étant pourvues d'échancrures 27 dans lesquelles peut pénétrer la matière de l'enrobage 10. On voit également que la périphérie extérieure de la plaquette 25a est entourée d'une épaisseur relativement faible de cet enrobage qui de par l'agencement même de la plaquette, peut être maintenue à une valeur pratiquement constante dans une mesure suffisante pour éviter que des défauts de rotondité à cet endroit puissent perturber le tourillonnement correct de l'ensemble central rigide ou mandrin 4.

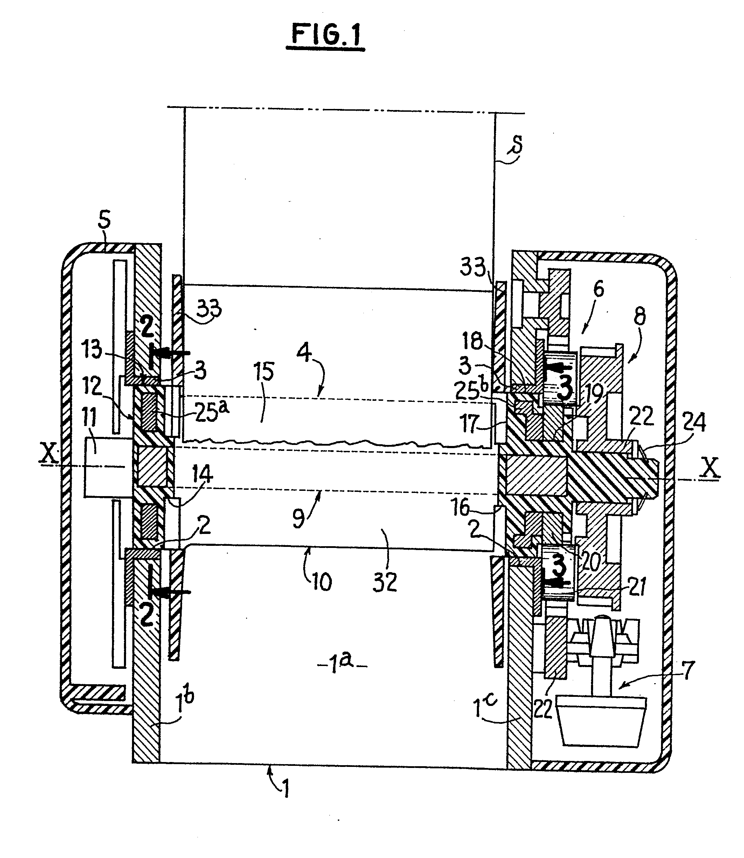

La plaquette 25b est représentée plus clairement sur les Fig.3 et 4. Elle est de forme générale circulaire et présente, comme la plaquette 25a, une ouverture rectangulaire centrale 28 de même section que celle de la lame 9, les grandes bases de cette ouverture étant pourvues d'échancrures respectives 29. Par ailleurs, des saillies 30 en forme de croissant, sont prévues par exemple par emboutissage, dans les bords des échancrures 29, ces saillies étant tournées vers l'extérieur comme représenté sur la Fig.1 afin de servir de surface radiale d'appui axial pour la came 22 lorsque l'on procède au moulage de l'enrobage 10. Celui-ci présente une épaisseur uniforme autour de la périphérie de la plaquette 25b vis à vis du coussinet 3 garantissant également à cet endroit, un tourillonnement correct du mandrin 4 lorsque la sangle est déroulée ou enroulée. On remarquera également que l'enrobage présente des dégagements 31 diamétralement opposés en regard des galets 21 du mécanisme de blocage 6 permettant ainsi un libre mouvement de ces galets qu'il serait difficile à obtenir dans le cas où cet enrobage présentait une surface radiale continue à cet endroit, en raison des tolérances assez larges pouvant se présenter dans les côtes longitudinales du mandrin 4.

La Fig.5 montre la forme de la section du mandrin 4 dans la zone où il reçoit la sangle S. Celle-ci est enroulée sur une bobine 32 munie de flasques latérales 33 et de fentes longitudinales pour le passage de la sangle. Celle-ci est bloquée dans le corps du mandrin 4 grâce à une goupille 34 engagée dans une boucle 35 cousue à l'extrémité de la sangle.

0093043

7

REVENDICATIONS

1. Rétracteur pour sangle de sécurité du type comportant un support (1), un ensemble central rigide (4) solidaire d'une extrémité de la sangle (S), monté rotatif dans le support (1) et autour duquel la sangle est destinée à s'enrouler sous l'action d'une force de rappel élastique, cet ensemble (4) étant en outre associé à un mécanisme de blocage (6) qui est capable d'empêcher la rotation de l'ensemble (4) dans le sens du déroulement de la sangle (S), lorsqu'une valeur limite d'accélération ou de décélération appliquée à la sangle (S) et/ou au support (1) est dépassée, ledit ensemble (4) comportant en tant que noyau central une lame métallique (9) enrobée dans de la matière plastique moulée (10) dans laquelle est ancrée la sangle et qui définit deux portées coaxiales (12,17) au moyen desquelles l'ensemble est monté à rotation dans le support, caractérisé en ce que ledit ensemble central rigide (4) comporte à chacune de ses extrémités une plaquette circulaire de renfort rigide (25a, 25b) engagée perpendiculairement sur l'extrémité correspondante de la lame métallique (9) dans la zone de portée de cet ensemble et en ce que la périphérie de chaque plaquette (25a,25b) n'est recouverte que d'une mince couche de l'enrobage (10) en matière plastique.

2. Rétracteur suivant la revendication 1, caractérisé en ce que la lame métallique (9) présentant une section rectangulaire, chacune desdites plaquettes (25a, 25b) présente une ouverture (26,28) de la section de cette lame (9) et disposée symétriquement par rapport à son axe, les grands côtés de l'ouverture présentant des échancrures (27,29) dans lesquelles la matière plastique d'enrobage (10) peut pénétrer.

3. Rétracteur suivant l'une quelconque des revendications 1 et 2, caractérisé en ce que la plaquette (25b) se trouvant du côté de l'ensemble central rigide (4), tourné vers le mécanisme de blocage (6) comporte

8

deux portions (30) en saillie de l'une de ses faces, et en ce que ces portions sont à découvert à la face terminale de l'ensemble rigide (4) afin de servir d'appui axial à un élément (26) faisant partie dudit mécanisme de blocage (6) et rigidement fixé en rotation audit ensemble central rigide (4).

4. Rétracteur suivant l'une quelconque des revendications 1 à 3, caractérisé en ce que chacune des portions (12,17) dudit enrobage (10) formant portée sont raccordées à la partie centrale de cet enrobage par l'intermédiaire de portions (14,16) de diamètre réduit.

## FIG.1

FIG.2

FIG.3

FIG.4

FIG.5

**RAPPORT DE RECHERCHE EUROPEENNE**

Office européen
des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-2 629 220   (LINDBLAD) <br> * En entier * | 1 | B 60 R   21/10 |
| A | FR-A-2 401 671   (FERODO) <br> * En entier * | 1 | |
| A | FR-A-2 476 491   (PEUGEOT) <br> * En entier * | 1 | |
| A | FR-A-2 481 604   (AUTOFLUG) <br> * En entier * | 1 | |
| A | US-A-3 291 416   (GENERAL MOTORS) <br> * En entier * | 1 | |
| D,A | DE-A-2 704 084   (GRANGES ESSEM) <br> * En entier * | 1 | |

DOMAINES TECHNIQUES
RECHERCHES (Int. Cl. ³)

B 60 R
A 62 B

Le présent rapport de recherche a été établi pour toutes les revendications

| Lieu de la recherche <br> **LA HAYE** | Date d'achèvement de la recherche <br> **28-07-1983** | Examinateur <br> **HEROUAN E.** |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82